# EUROPEAN PATENT SPECIFICATION

(11) **EP 4 319 121 B1**
(45) Date of publication and mention of the grant of the patent: **09.12.2026**
(21) Application number: 21962543.1
(22) Date of filing: 23.12.2021
(51) Int. Cl.: H04M 3/42, H04M 3/58

(54) **SERVER DEVICE AND TELEPHONE CONNECTION METHOD**
SERVERVORRICHTUNG UND TELEFONVERBINDUNGSVERFAHREN
DISPOSITIF SERVEUR ET PROCÉDÉ DE CONNEXION TÉLÉPHONIQUE

(30) Priority: 29.10.2021 JP 2021177045
(43) Date of publication of application: 07.02.2024
(73) Proprietor: NEC Platforms, Ltd., Kanagawa 213-8511 (JP)
(72) Inventor: KAKINAGA, Naomi, Kawasaki-shi, Kanagawa 213-8511 (JP); SUTOU, Kiyohide, Kawasaki-shi, Kanagawa 213-8511 (JP); KUBOTA, Masaru, Kawasaki-shi, Kanagawa 213-8511 (JP); UDAGAWA, Hikaru, Kawasaki-shi, Kanagawa 213-8511 (JP)
(74) Representative: Vossius & Partner Patentanwälte Rechtsanwälte mbB
(86) International application number: PCT/JP2021/048020
(87) International publication number: WO 2023/074006

(56) References cited:
- WO-A1-2006/129692
- WO-A1-2014/038156
- CN-A- 1 614 976
- JP-A- 2011 009 884
- JP-A- 2015 231 196
- JP-A- 2020 047 974
- JP-A- H10 240 656
- JP-A- H11 136 364
- US-B1- 6 307 929

## Description

### FIELD

### <Cross-reference to related application>

The present invention is based on the priority of Japanese patent application No. 2021-177045 (filed on October 29, 2021).

### BACKGROUND

There is a technology, so-called "call pickup", that realizes substitutive answering to an incoming call to a certain telephone machine with another telephone machine. (for example, Patent Literature 1)

PTL 1: Patent JP 6620256 B
PLT 2: US 6 307 929 B1 and CN 1 614 976 A are documents of the related art.

### SUMMARY

The following analysis is made from an aspect of the present invention.

In recent years, a working style, such as telework and the like, is adopted, under which a staff does not come to an office, thus there are needs to realize a telephone response (answering) as if the staff is at the office even when the staff is not working at the office. However, the technology of Patent Literature 1 merely achieves selection of a telephone machine to be used for substitutive answering from a plurality of telephone machines, thus the needs have not been satisfied.

Accordingly, it is a purpose of the present invention to provide a technology realizing a telephone response as if a staff is at the office even when the staff is not working at the office (or company).

The invention is specified by the independent claims. Preferred embodiments are defined in the dependent claims. In the following description, although numerous features may be designated as optional, it is nevertheless acknowledged that all features comprised in the independent claims are not to be read as optional.
According to first aspect of the present invention, there is provided a server apparatus, according to claim 1.

According to second aspect of the present invention, there is provided a telephone connection method, according to claim 7.

According to third aspect of the present invention, there is provided a telephone connection program, according to claim 8.

According to each aspect of the present invention, there are provided a server apparatus, a telephone connection method and a telephone connection program that contribute to realize a telephone response (answering) as if a staff is at an office (or company) even when the staff is not working at the office (or company).

### BRIEF DESCRIPTION OF THE DRAWINGS

Figure 1 is an explanatory view of one outline of the present invention.
Figure 2 is a diagram showing one outline of a call pickup system.
Figure 3 is a diagram showing one outline of a representative incoming call notification.
Figure 4 is a diagram showing one example of information to be notified by the representative incoming call notification.
Figure 5 is a diagram showing one outline of a representative telephone response.
Figure 6 is a diagram showing one outline of the representative telephone response.
Figure 7 is a diagram showing one example of information to be notified by a representative telephone response notification.
Figure 8 is a diagram showing one example of information to be notified by the representative telephone response notification.
Figure 9 is a diagram showing one example of information to be notified at the time of representative telephone switching.
Figure 10 is a diagram showing one example of information to be notified at the time of representative telephone switching.
Figure 11 is a diagram showing one example of information to be notified at the time of representative telephone switching.
Figure 12 is a diagram showing one example of information to be notified at the time of representative telephone switching.
Figure 13 is a diagram showing one example of information to be notified at the time of representative telephone response by a representative telephone machine 40.
Figure 14 is a diagram showing one example of information to be notified by a representative telephone intermediate abandonment notification.
Figure 15 is a diagram showing one example of information to be notified by a return call notification.
Figure 16 is a block diagram showing a configuration of a server apparatus 10.
Figure 17 is a flowchart diagram showing an operation flow by the server apparatus 10.
Figure 18 is a diagram showing a computer as the server apparatus 10.

### EXAMPLE EMBODIMENTS

A preferable exemplary embodiment which may be realized by the present invention is explained in detail with reference to the drawings. Herein, reference signs in the following description are expediently attached to each element as an explanatory aid for understanding, but not for limitation of the present invention to an illustrated configuration. In addition, connection lines between blocks in each figure include both of bidirectional and one directional. One way arrow schematically indicates a flow of main signal (data), thus does not exclude bidirectional. In addition, in a circuit diagram, a block diagram, an inner configuration diagram, a connection diagram, etc., illustrated in the present disclosure, an input/output ends of each connection lines respectively have input/output ports, but explicit indications thereof are omitted. The same is applied to input/output interfaces, too.

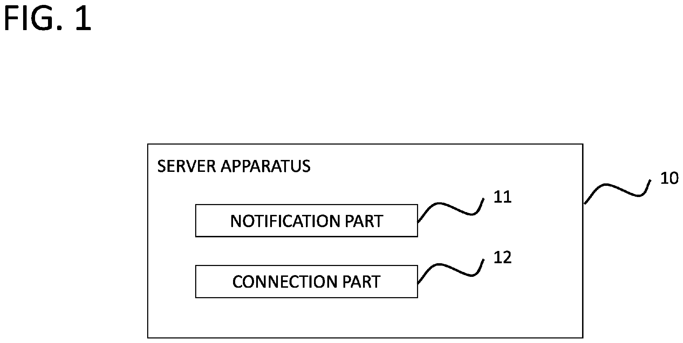

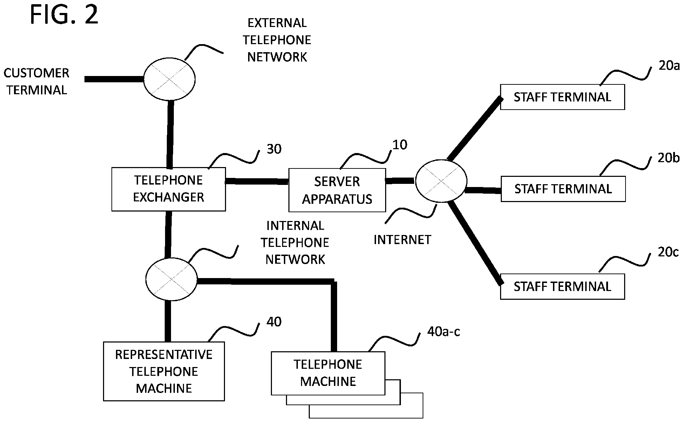

First, one outline of the present invention is explained. As illustrated in Figure 1, a server apparatus 10 comprises a notification part 11 and a connection part 12. When receiving an incoming call to a representative telephone number (a main number of an office), the notification part 11 multicastingly (at once to staff terminals) notifies a plurality of staff terminals 20a-20c (see Figure 2 and the like) which are previously registered in association with the representative telephone number of an occurrence of an incoming call. When receiving an answering operation from a first staff terminal 20a, the connection part 12 calls a telephone number of the first staff terminal 20a via a telephone exchanger 30 (see Figure 2 and the like) to establish a telephone connection thereto.

The outline is concretely explained by exemplifying one situation. In a certain office, when receiving an incoming call to a representative telephone number, a plurality of telephone machines ring multicastingly and someone among a plurality of staffs answers to the incoming call. Herein, in order to realize a telephone response (answering) as if a staff is present at the office even when the staff is not working at the office, it is considered to forward the telephone line [a telephone communication connection which has been established] to a terminal owned by the staff at his home or elsewhere. However, in the conventional telephone line forwarding service, the telephone line [the connection which has been established] is initially connected to a forwarding destination terminal to ring (call) the forwarding destination terminal. In other words, in the conventional telephone line forwarding service, one staff, one terminal and one telephone number as the forwarding destination have been previously designated. Therefore, it is impossible to simultaneously ring a plurality of terminals, thus the situation in which someone among a plurality of staffs answers to the call cannot be realized. Herein, even if a technology of Patent Literature 1 is adopted, merely realized is that a staff as the forwarding destination may select a terminal as a connection destination.

On the other hand, the server apparatus 10 of the present invention firstly multicastingly notifies the plurality of staff terminals 20a-c of an occurrence of the incoming call at once. This notification is performed before connecting a telephone line [forwarding the connection which has been established] using, for example, a message via an internet. By virtue of the broadcasting notification, a situation is realized, in which someone among a plurality of staffs responds to the call. In addition, when receiving an answering operation from a certain staff (first staff) among the plurality of staffs, the server apparatus 10 calls a telephone number of a terminal of the staff to establish a telephone connection. As described above, according to the server apparatus 10, a telephone response as if a staff is at the office (or company) even when the staff is not working at an office is realized.

### [Exemplary embodiment 1]

Next, a call pickup system comprising a server apparatus 10 of the present invention is explained. As illustrated in Figure 2, the call pickup system comprises a server apparatus 10, staff terminals 20a-c, a telephone exchanger 30, and a representative telephone machine 40. The telephone exchanger 30 is connected to an external telephone network (external line, Public Switched Telephone Network) and connected to the representative telephone machine 40, telephone machines 40a-c, etc., via an internal telephone network (internal line, private telephone network, extension). The server apparatus 10 is connected to the telephone exchanger 30 via a bus and the like, to monitor processes by the telephone exchanger 30. In addition, the server apparatus 10 is connected to the staff terminals 20a-c via a network (for example, internet) other than the telephone networks, and functions as a cloud server. An application for utilizing a cloud service is installed in the staff terminals 20a-c. The cloud service and the application are exemplified by, for example, a Microsoft Teams of Microsoft. In addition, the staff terminals 20a-c have external telephone function via the external telephone network. (Note that, in Figure 2, telephone connection lines to the staff terminals 20a-c are omitted.)

Under such premise, at first, services provided by a call pickup system of the present invention are explained.

### (1) Representative incoming call notification

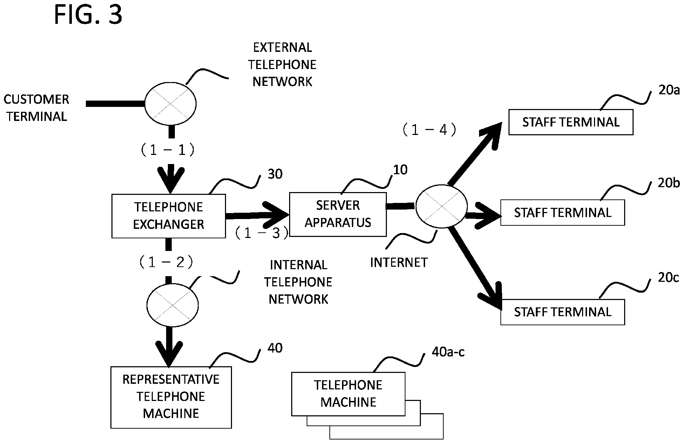

As illustrated in Figure 3, when receiving an external incoming call to a representative telephone number from a customer terminal (1-1), the telephone exchanger 30 causes the representative telephone machine 40 to ring (1-2). At that time, the server apparatus 10 detects the incoming call to the representative telephone number (1-3) and multicastingly notifies the staff terminals 20a-c at once of an occurrence of the incoming call via the internet (1-4).

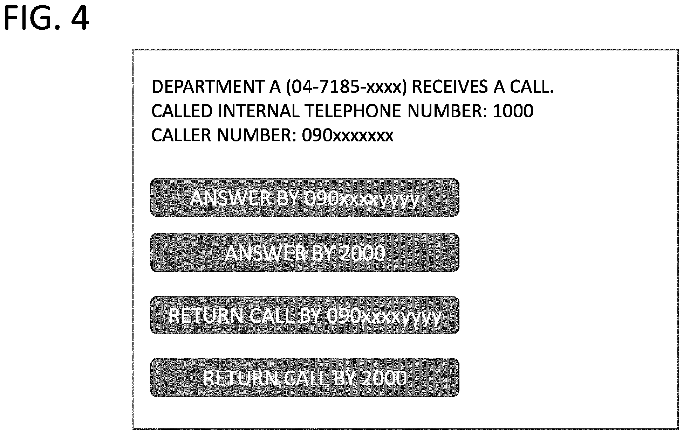

The staff terminals 20a-c that have received the incoming call notification from the server apparatus 10 presents an image, for example, indicated in Figure 4 on a display by virtue of the installed application. Concretely, the staff terminals 20a-c presents (displays) information that an external incoming call from a caller (090xxxxxxxxxx) to the representative telephone number (04-7185-xxxx) has been received and the representative telephone machine 40 (internal network call [internal telephone number]: 1000) is ringing.

In addition, the staff terminals 20a-c also display choices of whether answering to the external incoming call as an external telephone or answering to the external incoming call as an internal telephone. Concretely, the staff terminals 20a-c display buttons "ANSWER by 090xxxxyyyy" and "return call by 090xxxxyyyy" for answering as an external telephone. Further, the staff terminals 20a-c display buttons "ANSWER by 2000" and "RETURN CALL by 2000" for answering as an internal telephone.

In addition, the other staff terminals 20a-c may display information that any one of the staff terminals 20a-c is "ON A CALL" or "OUT OF SERVICE AREA". Further, even in a case where an incoming call externally from the customer terminal to the representative telephone number had been forwarded to another telephone machine, the representative incoming call notification may be also performed.

### (2) Representative telephone response

When an answering operation is received from a staff terminal 20a (2-1), the server apparatus 10 establishes a telephone connection line (session) between the customer terminal and the staff terminal 20a (2-2).

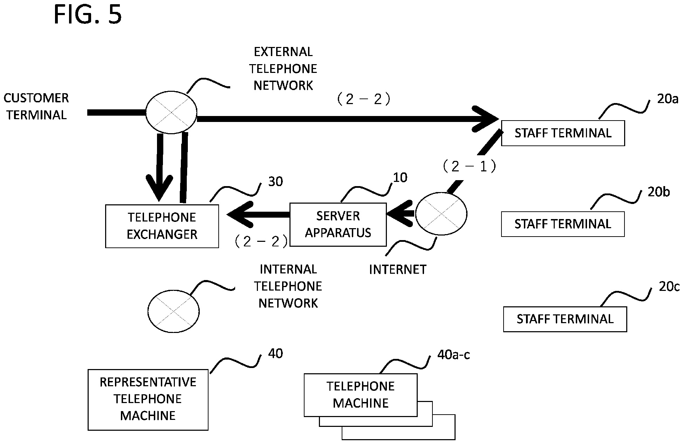

Concretely, as illustrated in Figure 5, when receiving an answering operation indicating answering to the external incoming call as an external telephone (2-1), the server apparatus 10 performs an external incoming call to a telephone number of the staff terminal 20a through the telephone exchanger 30 to establish a telephone connection (2-2). At that time, an external telephone connection line (session) between the customer terminal and the telephone exchanger 30 and an external telephone connection line (session) between the telephone exchanger 30 and the staff terminal 20a are established. In other words, the telephone exchanger 30 relays an external telephone communication between the customer terminal and the staff terminal 20a. Herein, the external telephone may be a fixed telephone in a home.

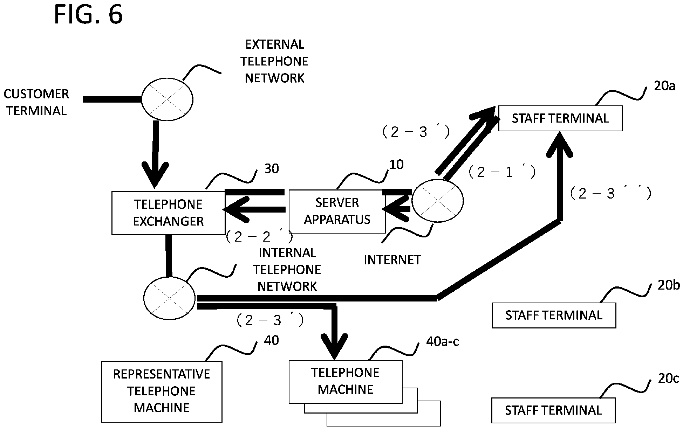

On the other hand, as illustrated in Figure 6, when receiving an answering operation indicating answering to the external incoming call as an internal telephone (2-1'), the server apparatus 10 establishes an internal telephone communication connection line (session) between itself and the telephone exchanger 30 (2-2'). In addition, the server apparatus 10 establishes a telephone connection line (session) between the customer terminal and the telephone machine 40a via the telephone exchanger 30 (2-3'). At that time, an external telephone connection line (session) between the customer terminal and the telephone exchanger 30 and an internal telephone connection line (session) between the telephone exchanger 30 and the telephone machine 40a are established. Herein, the internal telephone may be the staff terminals 20a-c having an internal telephone function using a cloud service (2-3").

Herein, in a case of receiving an answering operation indicating answering to the external incoming call from staff terminals 20b, c after establishment of the telephone connection to the customer terminal (including a case where answering to the external incoming call is made using the representative telephone machine 40), the staff terminals 20b, c are caused to display "RESPONSE FAILURE".

### (3) Representative telephone response notification

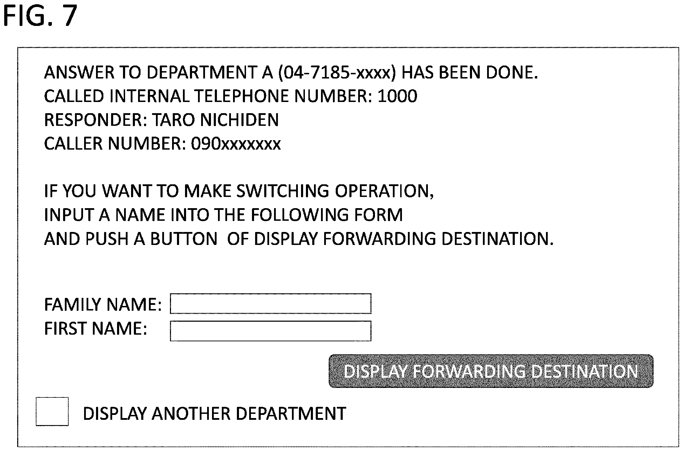

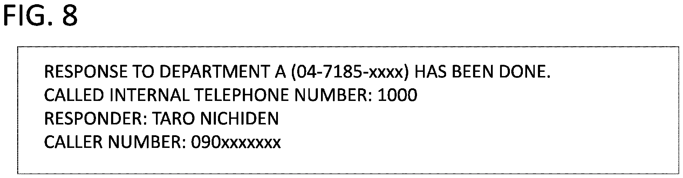

When the telephone connection line (session) between the customer terminal and the staff terminal 20a is established, the server apparatus 10 presents an image for switching operation (for telephone forwarding) on a display of the staff terminal 20a (for example, Figure 7). In addition, the server apparatus 10 presents an image indicating information that answering to the external incoming call has been already done on displays of the staff terminals 20b, c (for example, Figure 8).

### (4) Representative telephone switching (relaying)

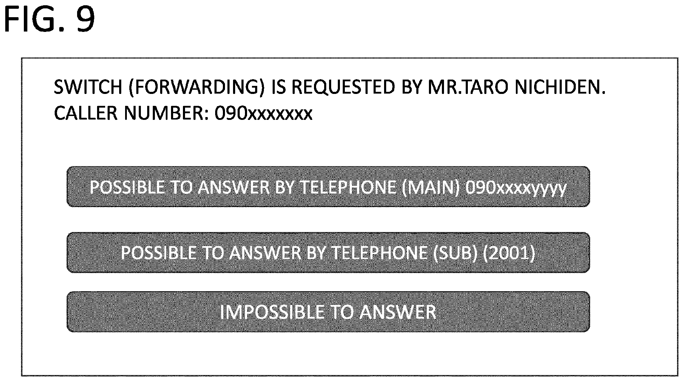

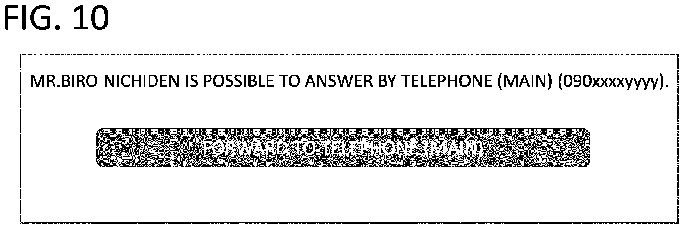

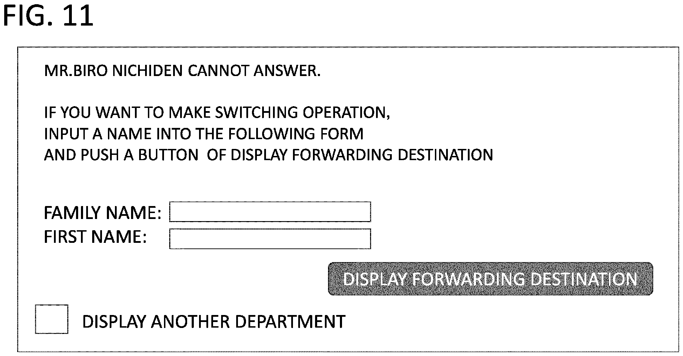

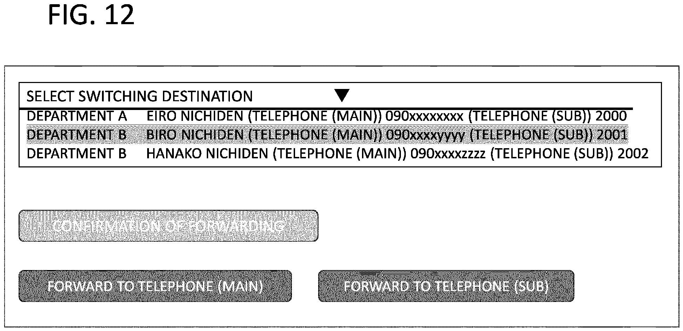

There is a case where it is required to forward a telephone connection to the staff terminal 20c as a result of conversation between the customer terminal and the staff terminal 20a (i.e., between the customer and Taro Nichiden who is an owner of the staff terminal 20a). In such case, the server apparatus 10 receives a switching operation [instruction] from the staff terminal 20a and establishes a telephone connection line (session) between the customer terminal and the staff terminal 20c as a forwarding destination. Concretely, when "DISPLAY FORWARDING DESTINATION" is operated on the image shown in Figure 7, the server apparatus 10 presents an image in which a forwarding destination terminal and a forwarding method may be designated on a display of the staff terminal 20a (for example, Figure 12). Family name and first name of a staff as a forwarding destination (an owner of staff terminal 20c) may be also input. When the staff terminal 20c is selected on the image shown in Figure 12 and then "CONFIRMATION OF FORWARDING" is operated, the server apparatus 10 presents an image for switching response (relaying) [accepting the telephone connection to be forwarded] on a display of the staff terminal 20c (for example, Figure 9). Herein, when the server apparatus 10 receives an answering operation indicating answering to the external incoming call as an external telephone communication (possible to answer as Telephone (main)), the server apparatus 10 presents an image for forwarding operation in which a forwarding method is designated on a display of the staff terminal 20a (for example, Figure 10). And then, the server apparatus 10 establishes an external telephone connection line (session) between the staff terminal 20c and the telephone exchanger 30 as a response to an answering operation received from the staff terminal 20a. Herein, when an operation indicating a switching response is impossible is performed on the staff terminal 20c, an image indicating such context is presented on a display of the staff terminal 20a (for example, Figure 11). According to the present exemplary embodiment, it is realized to switch (forward) telephone connection without concerning about whether or not a staff as a forwarding destination is working at an office (or company).

On the other hand, it is also possible that a staff as an owner of the staff terminal 20a and a staff as an owner of the staff terminal 20c perform a communication using a cloud service, to designate a forwarding method to the staff terminal 20c by the staff terminal 20a.

### (5) Representative telephone answering using representative telephone machine 40

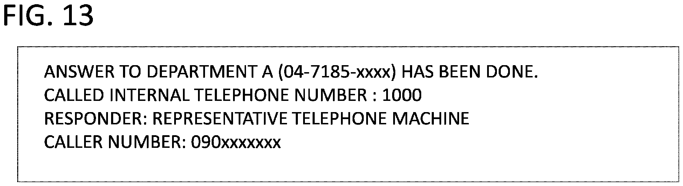

In a case where answering to the external incoming call is performed using the representative telephone machine 40, the server apparatus 10 presents on displays of the staff terminals 20a-c an image indicating information that answering to the external incoming call has been done using the representative telephone machine 40 (for example, Figure 13). In addition, the server apparatus 10 may present an image for the switching operation (for telephone forwarding) (Figure 7) on a PC (personal computer) of an operator who is answering using the representative telephone machine 40.

### (6) Representative telephone intermediary abandonment notification

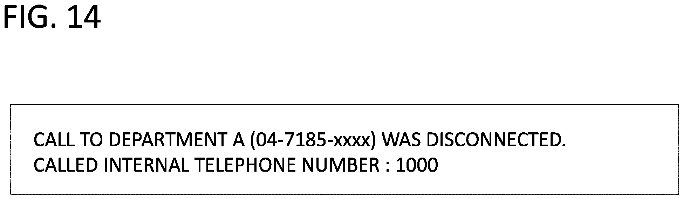

There is a case where a customer gives up on the way and abandons establishment of telephone connection to the representative telephone number. In such case, the server apparatus 10 presents an image indicating that such situation has occurred on displays of the staff terminals 20a-c (for example, Figure 14).

### (7) Return call

There is a case where a staff performs a return call to the incoming call to the representative telephone number which had been abandoned by a customer. In such case, the server apparatus 10 receives a return call operation ("RETURN CALL by 090xxxxyyyy" or "RETURN CALL by 2000" in the image of Figure 4) from, for example, the staff terminal 20a. In addition, the server apparatus 10 establishes a telephone connection line (session) between the staff terminal 20a and the telephone exchanger 30 according to the received operation [instruction] and performs an incoming call to the customer terminal via the telephone exchanger 30.

### (8) Return call notification

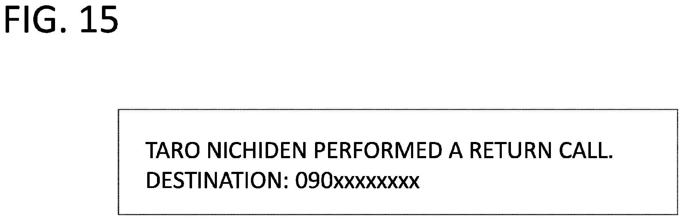

In a case where the return call from the staff terminal 20a to the customer terminal is performed, the server apparatus 10 presents an image indicating such situation has occurred on displays of the staff terminals 20b, c (for example, Figure 15).

### (9) Determination for out of service time

It is also possible to set days of a week, time zone, etc., for accepting external incoming call to the representative telephone number from a customer terminal. When an external incoming call from a customer terminal to the representative telephone number is received within a time zone in which no external incoming call is accepted, the server apparatus 10 notifies the customer terminal of a message indicating that it is out of service time.

Next, configurations of each apparatus are explained.

The staff terminals 20a-c are, for example, a smartphone having a function for presenting a notification received from the server apparatus 10 on their displays and a function for telephone communication. Herein, the function for presenting a notification and the function for telephone communication may be realized on independent apparatuses. For example, a PC (personal computer) may be adopted as an apparatus for presenting a notification, and a fixed telephone may be adopted as a telephone communication apparatus. As the other configurations of the staff terminals 20a-c, configurations of a standard smartphone may be applied thereto, thus explanations thereof are omitted.

The telephone exchanger 30 may be referred to as PBX: Private Branch eXchanger, which realizes an internal telephone communication within an office and an external telephone communication to an external area of the office (or company). The representative telephone machine 40 is a telephone machine to which a representative telephone number (03-0000-0000) is set. The telephone machines 40a-c are a telephone machine arranged in an office. As the telephone exchanger 30, the representative telephone machine 40 and the telephone machines 40a-c, a standard configuration may be applied, thus explanations thereof are omitted.

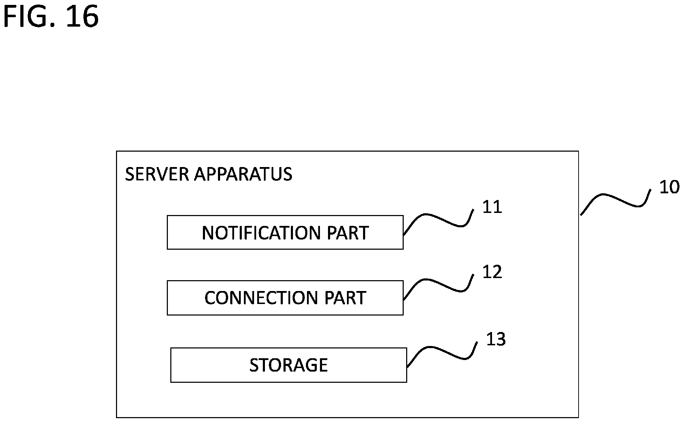

As illustrated in Figure 16, the server apparatus 10 of the exemplary embodiment 1 comprises a notification part 11, a connection part 12 and a storage 13. The storage 13 stores telephone numbers and terminal information of the staff terminals 20a-c in association with the representative telephone number. The terminal information is used for incoming call notification using a cloud service.

The notification part 11 monitors the telephone exchanger 30 to detect a process by the telephone exchanger 30 for ringing the representative telephone machine 40 upon an occurrence of an incoming call from a customer terminal to the representative telephone number. At that time, the notification part 11 makes reference to the storage 13 to acquire the telephone numbers of the staff terminals 20a-c. In addition, the notification part 11 multicastingly notifies at once the staff terminals 20a-c of the occurrence of the incoming call via a network different from a telephone network. Further, the notification part 11 presents each staff via staff terminals 20a-c of choices of connection methods including a connection via an external telephone network, a connection via an internal telephone network. Further, the notification part 11 notifies the staff terminals 20a-c that a response to the incoming call to representative telephone number has been performed, and a telephone connection to the representative telephone number has been abandoned at an intermediary.

When receiving an answering operation from a staff terminal 20a, the connection part 12 calls a telephone number of a staff terminal 20a via the telephone exchanger 30 to establish a telephone connection. The connection part 12 also controls the telephone exchanger 30 to establish a telephone connection line (session) between the customer terminal and one of the staff terminals 20a-c. In addition, when receiving an answering operation [instruction] including a connection method from the staff terminal 20a, the connection part 12 establishes a telephone connection to the staff terminal 20a according to the received connection method. Further, when receiving a return call operation from the staff terminal 20a, the connection part 12 performs an incoming call to the customer terminal which had made an incoming call to the representative telephone number so as to establish a telephone connection.

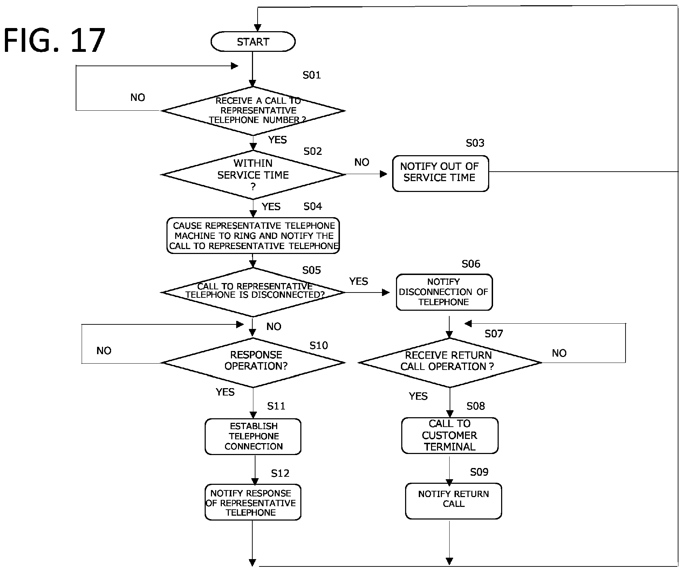

Next, a flow of processes by the server apparatus 10 is explained. As illustrated in Figure 17, when receiving an incoming call to a representative telephone number (Step S01, YES), the server apparatus 10 determines whether it is within a service time or not (Step S02). In a case where it is out of service time (Step S02, NO), the server apparatus 10 notifies a customer terminal of a message indicating that it is out of service time (Step S03), and waits another incoming call to the representative telephone number again.

On the other hand, in a case of within a service time (Step S02, YES), the server apparatus 10 causes the representative telephone machine 40 to ring and multicastingly notifies the staff terminals 20a-c of an occurrence of an incoming call (Step S04). Herein, in a case where a telephone connection to the representative telephone number is abandoned (Step S05, YES), the server apparatus 10 performs representative telephone intermediary abandonment notification to the staff terminals 20a-c (Step S06). After that, when receiving a return call operation from a staff terminal 20a (Step S07, YES), the server apparatus 10 establishes a telephone connection between the staff terminal 20a and the telephone exchanger 30, and performs an incoming call to the customer terminal via the telephone exchanger 30 (Step S08). In addition, the server apparatus 10 presents on displays of the staff terminals 20b, c that a return call has been made from the staff terminal 20a (Step S09).

In a case where the telephone connection the representative telephone number is not abandoned (Step S05, NO) and an answering operation from a staff terminal 20a is received (Step S10, YES), the server apparatus 10 establishes a telephone connection line (session) between the customer terminal and the staff terminal 20a (Step S11). In addition, the server apparatus 10 performs representative telephone response notification to the staff terminals 20a-c which have not performed the answering operation (Step S12).

After Step S09 and Step S12, the server apparatus 10 performs, upon needed, representative telephone switching that establishes a telephone connection line (session) between the customer terminal and the staff terminal 20c as a switching destination. In addition, when the telephone response is finished and the telephone connection line is cut off (session is terminated), the server apparatus 10 waits for another incoming call to the representative telephone number, again.

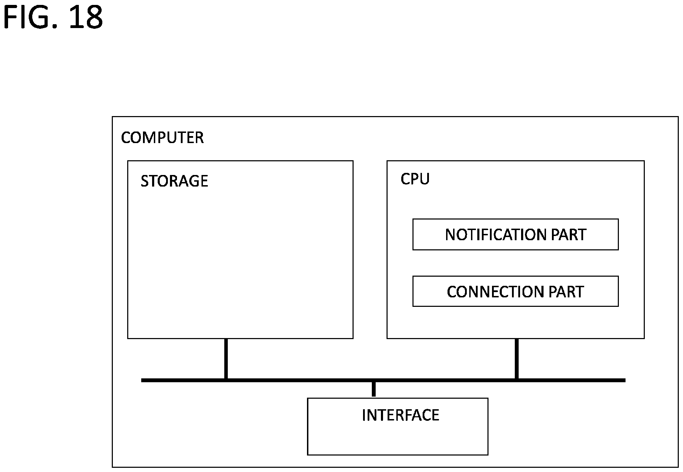

Herein, the present invention may be realized as a telephone connection method processed by a computer as the server apparatus 10 or a telephone connection program executed by the computer. That is, as illustrated in Figure 18, the present invention may be realized in a manner that CPU (Central Processing Unit) of a computer reads out a telephone connection program from a storage to realize modules corresponding to the notification part 11 and the connection part 12. The exemplary embodiment(s) or example(s) may be modified or adjusted within the scope of the entire disclosure of the present invention, based on the basic technical concept of the invention. In addition, a variety of combinations or selections (including partial selection or non-selection) of disclosed variety elements are envisaged. That is, the present disclosure, of course, may cover a variety of modifications or corrections that may be made by those skilled in the art. In particular, a numerical range described in the present application should be interpreted as specifically describing any numerical value or subrange included within said range, even if not explicitly described. Furthermore, each of the disclosure in the above cited references shall be deemed to be included in the description of the present application, when necessary, in whole or in part, in combination with the description of the present application, in accordance with the concept of the present invention.

The scope of protection of the invention is defined by the appended independent claims.

### REFERENCE SIGNS

10: Server apparatus
11: Notification part
12: Connection part
13: Storage
20a-c: Staff terminals
30: Telephone exchanger
40: Representative telephone machine
40a-c: telephone machine

## Claims

1. A server apparatus (10), comprising
a notification part (11) that, when receiving an incoming call to a representative telephone number, multicastingly notifies a plurality of staff terminals (20a-c) previously registered in association with the representative telephone number of an occurrence of the incoming call, and
a connection part (12) that, when receiving an answering operation from a first staff terminal (20a), calls a telephone number of the first staff terminal (20a) via a telephone exchanger (30) to establish a telephone connection thereto, **characterized in that**
the notification part (11) multicastingly presents choices of connection methods including a connection via an external telephone network and a connection via an internal telephone network to each of staffs through the plurality of staff terminals (20a-c), and
the connection part (12), when receiving, in response to the notification, an answering operation including a selected connection method from the first staff terminal (20a), establishes a telephone connection for the incoming call according to the received selected connection method to the first staff terminal (20a).

2. The server apparatus (10) according to claim 1, wherein the notification part (11) performs notification via a network different from a telephone network.

3. The server apparatus (10) according to Claim 1 or 2, wherein, when receiving a forwarding operation from the first staff terminal (20a) to a second staff terminal (20c), the connection part (12) calls a telephone number of the second staff terminal (20c) via the telephone exchanger (30) to establish a telephone connection.

4. The server apparatus (10) according to any one of Claims 1 to 3, wherein
when receiving a forwarding confirmation operation from the first staff terminal (20a) to a second staff terminal (20c),
the notification part (11) presents choices of connection methods including a connection via an external telephone network and a connection via an internal telephone network on the second staff terminal (20c).

5. The server apparatus (10) according to any one of Claims 1 to 4, wherein
the notification part (11) notifies a plurality of staff terminals (20a-c) that a response to the incoming call to the representative telephone number has been performed, or a telephone connection to the representative telephone number has been abandoned.

6. The server apparatus (10) according to any one of Claims 1 to 5, wherein
when receiving a return call operation from the first staff terminal (20a), the connection part (12) calls a terminal which had provided the incoming call to the representative telephone number to establish a telephone connection.

7. A telephone connection method executed by a server apparatus, the method comprising:
a notification step of, when receiving an incoming call to a representative telephone number, multicastingly notifying a plurality of staff terminals (20a-c) previously registered in association with the representative telephone number of an occurrence of the incoming call, and
a connection step of, when receiving an answering operation from a first staff terminal (20a), calling a telephone number of the first staff terminal (20a) via a telephone exchanger (30) to establish a telephone connection thereto, **characterized by**
multicastingly presenting choices of connection methods including a connection via an external telephone network and a connection via an internal telephone network to each of staffs through the plurality of staff terminals (20a-c), and
when receiving, in response to the notification, an answering operation including a selected connection method from the first staff terminal (20a), establishing a telephone connection for the incoming call according to the received selected connection method to the first staff terminal (20a).

8. A telephone connection program, causing a computer as a server apparatus to execute:
a process of, when receiving an incoming call to a representative telephone number, multicastingly notifying a plurality of staff terminals (20a-c) previously registered in association with the representative telephone number of an occurrence of the incoming call, and
a connection process of, when receiving an answering operation from a first staff terminal (20a), calling a telephone number of the first staff terminal (20a) via a telephone exchanger (30) to establish a telephone connection thereto, **characterized by**
multicastingly presenting choices of connection methods including a connection via an external telephone network and a connection via an internal telephone network to each of staffs through the plurality of staff terminals (20a-c), and
when receiving , in response to the notification, an answering operation including a selected connection method from the first staff terminal (20a), establishing a telephone connection for the incoming call according to the received selected connection method to the first staff terminal (20a).

9. The telephone connection method according to Claim 7, wherein the notification step is performed via a network different from a telephone network.

10. The telephone connection method according to Claim 7 or 9, comprising, when receiving a forwarding operation from the first staff terminal (20a) to a second staff terminal (20c), calling a telephone number of the second staff terminal (20c) via the telephone exchanger (30) to establish a telephone connection.

11. The telephone connection method according to any one of Claims 7, 9 or 10, comprising
when receiving a forwarding confirmation operation from the first staff terminal (20a) to a second staff terminal (20c),
presenting choices of connection methods including a connection via an external telephone network and a connection via an internal telephone network on the second staff terminal (20c).

12. The telephone connection method according to any one of Claims 7, 9 to 11, comprising
notifying a plurality of staff terminals (20a-c) that a response to the incoming call to the representative telephone number has been performed, or a telephone connection to the representative telephone number has been abandoned.

13. The telephone connection method according to any one of Claims 7, 9 to 12, comprising
when receiving a return call operation from the first staff terminal (20a), calling a terminal which has provided the incoming call to the representative telephone number to establish a telephone connection.

## Patentansprüche

1. Servereinrichtung (10), aufweisend
einen Benachrichtigungsteil (11), der, wenn ein eingehender Anruf an eine repräsentative Telefonnummer empfangen wird, mehrere Mitarbeiterendgeräte (20a-c), die zuvor in Verknüpfung mit der repräsentativen Telefonnummer registriert wurden, per Multicast über ein Auftreten des eingehenden Anrufs benachrichtigt, und
einen Verbindungsteil (12), der, wenn ein Antwortvorgang von einem ersten Mitarbeiterendgerät (20a) empfangen wird, eine Telefonnummer des ersten Mitarbeiterendgeräts (20a) mittels einer Telefonvermittlungsstelle (30) anruft, um eine Telefonverbindung dorthin herzustellen, **dadurch gekennzeichnet, dass**
der Benachrichtigungsteil (11) jedem der Mitarbeiter über die mehreren Mitarbeiterendgeräte (20a-c) per Multicast Auswahlmöglichkeiten von Verbindungsverfahren präsentiert, die eine Verbindung mittels eines externen Telefonnetzwerks und eine Verbindung mittels eines internen Telefonnetzwerks einschließen, und
der Verbindungsteil (12), wenn er, als Antwort auf die Benachrichtigung, einen Antwortvorgang, der ein ausgewähltes Verbindungsverfahren einschließt, von dem ersten Mitarbeiterendgerät (20a) empfängt, eine Telefonverbindung für den eingehenden Anruf gemäß dem empfangenen ausgewählten Verbindungsverfahren zu dem ersten Mitarbeiterendgerät (20a) herstellt.

2. Servereinrichtung (10) nach Anspruch 1, wobei der Benachrichtigungsteil (11) die Benachrichtigung mittels eines Netzwerks durchführt, das sich von einem Telefonnetzwerk unterscheidet.

3. Servereinrichtung (10) nach Anspruch 1 oder 2, wobei, wenn ein Weiterleitungsvorgang von dem ersten Mitarbeiterendgerät (20a) an ein zweites Mitarbeiterendgerät (20c) empfangen wird, der Verbindungsteil (12) eine Telefonnummer des zweiten Mitarbeiterendgeräts (20c) mittels der Telefonvermittlungsstelle (30) anruft, um eine Telefonverbindung herzustellen.

4. Servereinrichtung (10) nach einem der Ansprüche 1 bis 3, wobei
wenn ein Weiterleitungsbestätigungsvorgang von dem ersten Mitarbeiterendgerät (20a) an ein zweites Mitarbeiterendgerät (20c) empfangen wird,
der Benachrichtigungsteil (11) Auswahlmöglichkeiten von Verbindungsverfahren präsentiert, die eine Verbindung mittels eines externen Telefonnetzwerks und eine Verbindung mittels eines internen Telefonnetzwerks auf dem zweiten Mitarbeiterendgerät (20c) einschließen.

5. Servereinrichtung (10) nach einem der Ansprüche 1 bis 4, wobei
der Benachrichtigungsteil (11) mehrere Mitarbeiterendgeräte (20a-c) benachrichtigt, dass eine Antwort auf den eingehenden Anruf bei der repräsentativen Telefonnummer durchgeführt wurde oder eine Telefonverbindung zu der repräsentativen Telefonnummer abgebrochen wurde.

6. Servereinrichtung (10) nach einem der Ansprüche 1 bis 5, wobei
wenn ein Rückrufvorgang von dem ersten Mitarbeiterendgerät (20a) empfangen wird, der Verbindungsteil (12) ein Endgerät anruft, das den eingehenden Anruf an die repräsentative Telefonnummer bereitgestellt hatte, um eine Telefonverbindung herzustellen.

7. Telefonverbindungsverfahren, das durch eine Servereinrichtung ausgeführt wird, das Verfahren aufweisend:
einen Benachrichtigungsschritt zum, wenn ein eingehender Anruf an eine repräsentative Telefonnummer empfangen wird, Benachrichtigen, per Multicast, mehrerer Mitarbeiterendgeräte (20a-c), die zuvor in Verknüpfung mit der repräsentativen Telefonnummer registriert wurden, über ein Auftreten des eingehenden Anrufs, und
einen Verbindungsschritt zum, wenn ein Antwortvorgang von einem ersten Mitarbeiterendgerät (20a) empfangen wird, Anrufen einer Telefonnummer des ersten Mitarbeiterendgeräts (20a) mittels einer Telefonvermittlungsstelle (30), um eine Telefonverbindung dorthin herzustellen, **gekennzeichnet durch**
Präsentieren, per Multicast, von Auswahlmöglichkeiten von Verbindungsverfahren, die eine Verbindung mittels eines externen Telefonnetzwerks und eine Verbindung mittels eines internen Telefonnetzwerks einschließen, an jeden der Mitarbeiter über die mehreren Mitarbeiterendgeräte (20a-c), und
wenn, als Antwort auf die Benachrichtigung, ein Antwortvorgang, der ein ausgewähltes Verbindungsverfahren einschließt, von dem ersten Mitarbeiterendgerät (20a) empfangen wird, Herstellen einer Telefonverbindung für den eingehenden Anruf gemäß dem empfangenen ausgewählten Verbindungsverfahren zu dem ersten Mitarbeiterendgerät (20a).

8. Telefonverbindungsprogramm, das einen Computer als eine Servereinrichtung veranlasst, auszuführen:
einen Prozess des, wenn ein eingehender Anruf an eine repräsentative Telefonnummer empfangen wird, Benachrichtigens, per Multicast, mehrerer Mitarbeiterendgeräte (20a-c), die zuvor in Verknüpfung mit der repräsentativen Telefonnummer registriert wurden, über ein Auftreten des eingehenden Anrufs, und
einen Verbindungsprozess des, wenn ein Antwortvorgang von einem ersten Mitarbeiterendgerät (20a) empfangen wird, Anrufens einer Telefonnummer des ersten Mitarbeiterendgeräts (20a) mittels einer Telefonvermittlungsstelle (30), um eine Telefonverbindung dorthin herzustellen, **gekennzeichnet durch**
Präsentieren, per Multicast, von Auswahlmöglichkeiten von Verbindungsverfahren, die eine Verbindung mittels eines externen Telefonnetzwerks und eine Verbindung mittels eines internen Telefonnetzwerks einschließen, an jeden der Mitarbeiter über die mehreren Mitarbeiterendgeräte (20a-c), und
wenn, als Antwort auf die Benachrichtigung, ein Antwortvorgang, der ein ausgewähltes Verbindungsverfahren einschließt, von dem ersten Mitarbeiterendgerät (20a) empfangen wird, Herstellen einer Telefonverbindung für den eingehenden Anruf gemäß dem empfangenen ausgewählten Verbindungsverfahren zu dem ersten Mitarbeiterendgerät (20a).

9. Telefonverbindungsverfahren nach Anspruch 7, wobei der Benachrichtigungsschritt mittels eines Netzwerks durchgeführt wird, das sich von einem Telefonnetzwerk unterscheidet.

10. Telefonverbindungsverfahren nach Anspruch 7 oder 9, aufweisend, wenn ein Weiterleitungsvorgang von dem ersten Mitarbeiterendgerät (20a) an ein zweites Mitarbeiterendgerät (20c) empfangen wird, das Anrufen einer Telefonnummer des zweiten Mitarbeiterendgeräts (20c) mittels der Telefonvermittlungsstelle (30), um eine Telefonverbindung herzustellen.

11. Telefonverbindungsverfahren nach einem der Ansprüche 7, 9 oder 10, aufweisend
wenn ein Weiterleitungsbestätigungsvorgang von dem ersten Mitarbeiterendgerät (20a) an ein zweites Mitarbeiterendgerät (20c) empfangen wird,
Präsentieren von Auswahlmöglichkeiten von Verbindungsverfahren, die eine Verbindung mittels eines externen Telefonnetzwerks und eine Verbindung mittels eines internen Telefonnetzwerks einschließen, auf dem zweiten Mitarbeiterendgerät (20c).

12. Telefonverbindungsverfahren nach einem der Ansprüche 7, 9 bis 11, aufweisend
Benachrichtigen mehrerer Mitarbeiterendgeräte (20a-c), dass eine Antwort des eingehenden Anrufs an die repräsentative Telefonnummer durchgeführt wurde oder eine Telefonverbindung zu der repräsentativen Telefonnummer abgebrochen wurde.

13. Telefonverbindungsverfahren nach einem der Ansprüche 7, 9 bis 12, aufweisend
wenn ein Rückrufvorgang von dem ersten Mitarbeiterendgerät (20a) empfangen wird, Anrufen eines Endgeräts, das den eingehenden Anruf an die repräsentative Telefonnummer bereitgestellt hat, um eine Telefonverbindung herzustellen.

## Revendications

1. Appareil serveur (10), comprenant
une partie de notification (11) qui, lors de la réception d'un appel entrant vers un numéro de téléphone représentatif, notifie par multidiffusion, à une pluralité de terminaux de personnel (20a-c) préalablement enregistrés en association avec le numéro de téléphone représentatif, une occurrence de l'appel entrant, et
une partie de connexion (12) qui, lors de la réception d'une opération de réponse en provenance d'un premier terminal de personnel (20a), appelle un numéro de téléphone du premier terminal de personnel (20a) par l'intermédiaire d'un central téléphonique (30) pour établir une connexion téléphonique avec celui-ci, **caractérisé en ce que**
la partie de notification (11) présente par multidiffusion des choix de procédés de connexion comportant une connexion par l'intermédiaire d'un réseau téléphonique externe et une connexion par l'intermédiaire d'un réseau téléphonique interne à chacun des membres du personnel par le biais de la pluralité de terminaux de personnel (20a-c), et
la partie de connexion (12), lors de la réception, en réponse à la notification, d'une opération de réponse comportant un procédé de connexion sélectionné en provenance du premier terminal de personnel (20a), établit une connexion téléphonique pour l'appel entrant selon le procédé de connexion sélectionné reçu vers le premier terminal de personnel (20a).

2. Appareil serveur (10) selon la revendication 1, dans lequel la partie de notification (11) réalise une notification par l'intermédiaire d'un réseau différent d'un réseau téléphonique.

3. Appareil serveur (10) selon la revendication 1 ou 2, dans lequel, lors de la réception d'une opération de transfert depuis le premier terminal de personnel (20a) vers un second terminal de personnel (20c), la partie de connexion (12) appelle un numéro de téléphone du second terminal de personnel (20c) par l'intermédiaire du central téléphonique (30) pour établir une connexion téléphonique.

4. Appareil serveur (10) selon l'une quelconque des revendications 1 à 3, dans lequel
lors de la réception d'une opération de confirmation de transfert en provenance du premier terminal de personnel (20a) vers un second terminal de personnel (20c),
la partie de notification (11) présente des choix de procédés de connexion comportant une connexion par l'intermédiaire d'un réseau téléphonique externe et une connexion par l'intermédiaire d'un réseau téléphonique interne sur le second terminal de personnel (20c).

5. Appareil serveur (10) selon l'une quelconque des revendications 1 à 4, dans lequel
la partie de notification (11) notifie à une pluralité de terminaux de personnel (20a-c) qu'une réponse à l'appel entrant vers le numéro de téléphone représentatif a été réalisée, ou qu'une connexion téléphonique au numéro de téléphone représentatif a été abandonnée.

6. Appareil serveur (10) selon l'une quelconque des revendications 1 à 5, dans lequel
lors de la réception d'une opération de rappel en provenance du premier terminal de personnel (20a), la partie de connexion (12) appelle un terminal qui avait fourni l'appel entrant au numéro de téléphone représentatif pour établir une connexion téléphonique.

7. Procédé de connexion téléphonique exécuté par un appareil serveur, le procédé comprenant :
une étape de notification consistant, lors de la réception d'un appel entrant vers un numéro de téléphone représentatif, à notifier par multidiffusion, à une pluralité de terminaux de personnel (20a-c) préalablement enregistrés en association avec le numéro de téléphone représentatif, une occurrence de l'appel entrant, et
une étape de connexion consistant à, lors de la réception d'une opération de réponse en provenance d'un premier terminal de personnel (20a), appeler un numéro de téléphone du premier terminal de personnel (20a) par l'intermédiaire d'un central téléphonique (30) pour établir une connexion téléphonique avec celui-ci, **caractérisé par**
la présentation par multidiffusion de choix de procédés de connexion comportant une connexion par l'intermédiaire d'un réseau téléphonique externe et une connexion par l'intermédiaire d'un réseau téléphonique interne à chacun des membres du personnel par le biais de la pluralité de terminaux de personnel (20a-c), et
lors de la réception, en réponse à la notification, d'une opération de réponse comportant un procédé de connexion sélectionné en provenance du premier terminal de personnel (20a), l'établissement d'une connexion téléphonique pour l'appel entrant selon le procédé de connexion sélectionné reçu vers le premier terminal de personnel (20a).

8. Programme de connexion téléphonique, amenant un ordinateur en tant qu'appareil serveur à exécuter :
un processus consistant à, lors de la réception d'un appel entrant vers un numéro de téléphone représentatif, notifier par multidiffusion, à une pluralité de terminaux de personnel (20a-c) préalablement enregistrés en association avec le numéro de téléphone représentatif, une occurrence de l'appel entrant, et
un processus de connexion consistant, lors de la réception d'une opération de réponse en provenance d'un premier terminal de personnel (20a), à appeler un numéro de téléphone du premier terminal de personnel (20a) par l'intermédiaire d'un central téléphonique (30) pour établir une connexion téléphonique avec celui-ci, **caractérisé par**
la présentation par multidiffusion de choix de procédés de connexion comportant une connexion par l'intermédiaire d'un réseau téléphonique externe et une connexion par l'intermédiaire d'un réseau téléphonique interne à chacun des membres du personnel par le biais de la pluralité de terminaux de personnel (20a-c), et
lors de la réception, en réponse à la notification, d'une opération de réponse comportant un procédé de connexion sélectionné en provenance du premier terminal de personnel (20a), l'établissement d'une connexion téléphonique pour l'appel entrant selon le procédé de connexion sélectionné reçu vers le premier terminal de personnel (20a).

9. Procédé de connexion téléphonique selon la revendication 7, dans lequel l'étape de notification est réalisée par l'intermédiaire d'un réseau différent d'un réseau téléphonique.

10. Procédé de connexion téléphonique selon la revendication 7 ou 9, comprenant, lors de la réception d'une opération de transfert du premier terminal de personnel (20a) vers un second terminal de personnel (20c), l'appel d'un numéro de téléphone du second terminal de personnel (20c) par l'intermédiaire du central téléphonique (30) pour établir une connexion téléphonique.

11. Procédé de connexion téléphonique selon l'une quelconque des revendications 7, 9 ou 10, comprenant
lors de la réception d'une opération de confirmation de transfert en provenance du premier terminal de personnel (20a) vers un second terminal de personnel (20c),
la présentation de choix de procédés de connexion comportant une connexion par l'intermédiaire d'un réseau téléphonique externe et une connexion par l'intermédiaire d'un réseau téléphonique interne sur le second terminal de personnel (20c).

12. Procédé de connexion téléphonique selon l'une quelconque des revendications 7, 9 à 11, comprenant
la notification, à une pluralité de terminaux de personnel (20a-c), qu'une réponse à l'appel entrant vers le numéro de téléphone représentatif a été réalisée, ou qu'une connexion téléphonique au numéro de téléphone représentatif a été abandonnée.

13. Procédé de connexion téléphonique selon l'une quelconque des revendications 7, 9 à 12, comprenant
lors de la réception d'une opération de rappel en provenance du premier terminal de personnel (20a), l'appel d'un terminal qui a fourni l'appel entrant au numéro de téléphone représentatif pour établir une connexion téléphonique.
